# EUROPEAN PATENT SPECIFICATION

(11) **EP 3 184 591 B1**
(45) Date of publication and mention of the grant of the patent: **14.11.2018**
(21) Application number: 16205195.7
(22) Date of filing: 20.12.2016
(51) Int. Cl.: C09D 5/08

(54) **CORROSION PROTECTION OF METALS**
KORROSIONSSCHUTZ FÜR METALLE
PROTECTION CONTRE LA CORROSION DE MÉTAUX

(30) Priority: 24.12.2015 CN 201510987977
(43) Date of publication of application: 28.06.2017
(73) Proprietor: General Electric Company, Schenectady, NY 12345 (US)
(72) Inventor: WANG, Shizhong, Shanghai, Shanghai 201203 (CN); MORRA, Martin Matthew, Niskayuna, NY New York 12309 (US); CAO, Lei, Shanghai, Shanghai 201203 (CN); JIN, Yiteng, Shanghai, Shanghai 201203 (CN); ZHANG, Xiao, Shanghai, Shanghai 201203 (CN); HUANG, Qunjian, Shanghai, Shanghai 201203 (CN); GUO, Minghu, Shanghai, Shanghai 201203 (CN); LOU, Xiaoyuan, Niskayuna, NY New York 12309 (US); LI, Xiaxi, Shanghai, Shanghai 201203 (CN); FU, Qijia, Shanghai, Shanghai 201203 (CN); XIN, Qianqian, Shanghai, Shanghai 201203 (CN)
(74) Representative: Foster, Christopher Michael

(56) References cited:
- WO-A2-03/012167
- WO-A2-2010/008577
- DE-A1-102008 023 569
- DE-A1-102014 105 434

## Description

### BACKGROUND

The present invention generally relates to a method for protecting an article from sulfate corrosion and an article having an improved resistance to sulfate corrosion, and more specifically, to a method for protecting an article from sulfate corrosion resulting from exposure to a sulfate containing material at an elevated temperature and an article having an improved resistance to such sulfate corrosion.

Anti-corrosion coatings for high temperature environments are known in the prior art, for example from DE 10 2008 023 569 A1 and anti-corrosion coatings comprising spinel compounds are also known, for example from DE 10 2014 105 434 A1. Hot corrosion is a typical problem for metallic components exposed to fuels or materials which contain corrosive contaminants in aviation and power industries. It is accelerated corrosion that occurs in the presence of environmental salts and sulfates containing elements such as sodium, magnesium, potassium, calcium, vanadium, and various halides. The corrosion may damage a protective oxide surface or oxide coating of a metallic component. At a relatively higher temperature, such as higher than about 850°C, the hot corrosion occurs above the melting point of most of the sulfates and simple salts. The sulfates and salts may form a liquid deposit on the component surface, and the liquid deposit may attack the component surface through a fluxing mechanism. As such, dissolution (fluxing) may occur to the protective oxide surface of the component. At a relatively lower temperature, for example of about 650-800°C, the sulfates may attack the component surface through a pitting mechanism. Sulfidation and oxidation reactions may initiate on discontinuities on the surface and propagate on a localized basis, generating pitting. The pits may occur at an unpredictably rapid rate and initiate cracks that propagate into the base alloy of the component, leading to catastrophic failure. Consequently, the load-carrying ability of the component is reduced, leading eventually to its catastrophic failure.

Efforts have been made to study characteristics and mechanism of the hot corrosion and develop different approaches to mitigate the hot corrosion. But there is still no mature technology to address such hot corrosion. Especially, as most of the study so far are focusing on the hot corrosion caused by molten salts with high conductivities, there is no approach to effectively mitigate the hot corrosion caused by pitting at a relatively lower temperature such as 650-800°C, which may be common under an operation condition in the aviation and power industries. Accordingly, it is desirable to develop new methods and materials for preventing such sulfate corrosion.

### BRIEF DESCRIPTION

In one aspect, a method for protecting a surface of an article from sulfate corrosion resulting from exposure to a sulfate containing material at an elevated temperature includes coating the surface with a nickel based material to form an anti-corrosion coating. The nickel based material includes NiO, a spinel of formulation AB₂O₄, or a combination thereof, wherein A includes nickel, and B includes iron or a combination of manganese and a B site dopant.

In another aspect, an article having an improved resistance to sulfate corrosion resulting from exposure to a sulfate containing material at an elevated temperature includes a metallic substrate and an anti-corrosion coating deposited on the metallic substrate. The anti-corrosion coating includes NiO, a spinel of formulation AB₂O₄, or a combination thereof, wherein A includes nickel, and B includes iron or a combination of manganese and a B site dopant.

### BRIEF DESCRIPTION OF THE DRAWINGS

The above and other aspects, features, and advantages of the present disclosure will become more apparent in light of the subsequent detailed description when taken in conjunction with the accompanying drawings in which:
FIG. 1 is a graph showing SO₂ intensity signals for evaluating catalytic activity of different tested spinels.
FIG. 2A is a graph showing a scanning electron microscopy (SEM) image of a cross section of Sample 1, and FIG. 2B is a diagram showing compositions of areas labeled in FIG. 2A.
FIG. 3A is a graph showing a SEM image of a cross section of Sample 2, and FIG. 3B is a diagram showing compositions of areas labeled in FIG. 3A.
FIG. 4A is a graph showing a SEM image of a cross section of Sample 3, and FIG. 4B is a diagram showing compositions of areas labeled in FIG. 4A.
FIG. 5A is a graph showing a SEM image of a cross section of Sample 4, and FIG. 5B is a diagram showing compositions of areas labeled in FIG. 5A.
FIG. 6A is a graph showing a SEM image of a cross section of Sample 5, and FIG. 6B is a diagram showing compositions of areas labeled in FIG. 6A.
FIG. 7A is a graph showing a SEM image of a cross section of Sample 6, and FIG. 7B is a diagram showing compositions of areas labeled in FIG. 7A.
FIG. 8A is a graph showing a SEM image of a cross section of Sample 7, and FIG. 8B is a diagram showing compositions of areas labeled in FIG. 8A.
FIG. 9A is a graph showing a SEM image of a cross section of Sample 8, and FIG. 9B is a diagram showing compositions of areas labeled in FIG. 9A.
FIG. 10A is a graph showing a SEM image of a cross section of Sample 9, and FIG. 10B is a diagram showing compositions of areas labeled in FIG. 10A.
FIG. 11A is a graph showing a SEM image of a cross section of Sample 10, and FIG. 11B is a diagram showing compositions of areas labeled in FIG. 11A.
FIG. 12A is a graph showing a SEM image of a cross section of Sample 11, and FIG. 12B is a diagram showing compositions of areas labeled in FIG. 12A.
FIG. 13A is a graph showing a SEM image of a cross section of Sample 12, and FIG. 13B is a diagram showing compositions of areas labeled in FIG. 13A.
FIG. 14A is a graph showing a SEM image of a cross section of Sample 13, and FIG. 14B is a diagram showing compositions of areas labeled in FIG. 14A.
FIG. 15A is a graph showing a SEM image of a cross section of Sample 14, and FIG. 15B is a diagram showing compositions of areas labeled in FIG. 15A.
FIG. 16A is a graph showing a SEM image of a cross section of Sample 15, and FIG. 16B is a diagram showing compositions of areas labeled in FIG. 16A.
FIG. 17A is a graph showing a SEM image of a cross section of Sample 16, and FIG. 17B is a diagram showing compositions of areas labeled in FIG. 17A.
FIG. 18A is a graph showing a SEM image of a cross section of Sample 17, and FIG. 18B is a diagram showing compositions of areas labeled in FIG. 18A.

### DETAILED DESCRIPTION

One or more embodiments of the present disclosure will be described below. Unless defined otherwise, technical and scientific terms used herein have the same meaning as is commonly understood by one of skill in the art to which this invention belongs. The terms "a" and "an" do not denote a limitation of quantity, but rather denote the presence of at least one of the referenced items. Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. Additionally, when using an expression of "about a first value - a second value," the about is intended to modify both values. In at least some instances, the approximating language may correspond to the precision of an instrument for measuring the value. Here, and throughout the specification and claims, range limitations may be combined and/or interchanged, such ranges are identified and include all the sub-ranges contained therein unless context or language indicates otherwise.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Embodiments of the present disclosure relate to a type of nickel based coating materials that can be used in power generation, aviation, and other applications involving hot and corrosive environment, to protect metallic articles such as gas turbine or engine components from sulfate corrosion and thereby significantly improve the service life of the articles. This type of nickel based coating materials are stable while exposed to a sulfate containing material (corrodent) at an elevated temperature, and can be used to provide a multifunctional coating for anti-corrosion applications. The unique anti-corrosion property of the nickel based coating material may be related to its high chemical stability and high catalytic activity for sulfate decomposition, which may change interfacial interaction between the corrodent and the coating. In some embodiments, the nickel based coating material and a coating of this material (also referred to as "nickel based coating", "nickel based anti-corrosion coating", or "anti-corrosion coating" hereinafter) can not only make sulfate decompose, for example, at about 750°C, earlier than the sulfate decomposes itself, but also prevent SO₃/sulfate formation by converting sulfur trioxide (SO₃) to sulfur dioxide (SO₂). The sulfate may decompose to produce the corresponding metal oxide, SO₂ and oxygen:

2MSO₄→2MO+2SO₂+O₂,

wherein M represents a metal.

SO₃/sulfate formation may be prevented by converting SO₃ to SO₂ and oxygen:

2SO₃ →2SO₂+O₂

The nickel based coating may have a composition substantially the same with that of the nickel based coating material, and therefore they may be described together hereinafter. The nickel based coating material or the coating may include nickel oxide (NiO), a nickel based spinel of general formulation AB₂O₄ (A²⁺B³⁺₂O²⁻₄), or a combination thereof. Although the charges of A and B in a prototypical spinel structure are +2 and +3, respectively, combinations incorporating univalent, divalent, trivalent, or tetravalent cations, such as potassium, magnesium, aluminum, chromium, and silicon, are also possible. It is found that the spinel AB₂O₄ has the catalytic activity for sulfate decomposition when A includes nickel (Ni) and B includes one or more transition metals such as chromium (Cr), manganese (Mn), iron (Fe), cobalt (Co).

Besides Ni, A may further include an A site dopant. The A site dopant may be any suitable element(s) that can be doped to the A sites of the spinel. Similarly, B may further include a B site dopant. The B site dopant may be any suitable element(s) that can be doped to the B sites of the spinel. In some embodiments, the A site dopant or the B site dopant may include aluminum (Al), gallium (Ga), indium (In), silicon (Si), titanium (Ti), vanadium (V), chromium (Cr), iron (Fe), cobalt (Co), copper (Cu), zinc (Zn), sodium (Na), potassium (K), magnesium (Mg), a rare earth element, or a combination thereof. The rare earth element may include lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), ebium (Er), thulium (Tm), ytterbium (Yb), lutetium (Lu), yttrium (Y), scandium (Sc), or a combination thereof.

The dopant(s) may increase the stability of the spinel AB₂O₄. For example, NiFe₂O₄ is stable whereas NiCr₂O₄, NiMn₂O₄ and MCo₂O₄ are not stable while exposed to the sulfate containing corrodent, but a B-site dopant can increase the stability of NiMn₂O₄. The B-site doped NiMn₂O₄ has both catalytic activity for sulfate decomposition and high chemical stability.

In some embodiments, the nickel based material or the coating includes NiO, a spinel of formulation AB₂O₄, or a combination thereof, wherein A includes Ni, and B includes Fe, or a combination of Mn and a B site dopant as described above. In some particular embodiments, the B site dopant includes Cr, Co, Al, or a combination thereof. Some examples of suitable spinels include NiFe₂O₄, Ni(Fe₂₋ₓCoₓ)O₄, Ni(Fe₂₋ₓAlₓ)O₄ and Ni(Mn₂₋ₓAlₓ)O₄, wherein 0<x<2.

The nickel based coating material or the coating shows high catalytic activity for sulfate decomposition, and itself is very stable while exposed to a corrodent containing sulfate and dust at an elevated temperature, and therefore can prevent sulfur related corrosion at the elevated temperature. Moreover, the nickel based coating material or the coating may have a long-lasting sulfur resistance, and can withstand sulfate corrosion at the elevated temperature over an extended time, for example, over 500 hours. "Elevated temperature" used herein may generally refer to a temperature which is higher than normal, for example, higher than the ambient temperature. In some embodiments, the "elevated temperature" refers in particular to an operation temperature in power generation, aviation, and other applications involving hot and corrosive environment. For example, the elevated temperature may refer to an operation temperature in gas turbines or engines, such as a jet engine. In some specific embodiments, the elevated temperature refers to a temperature higher than about 500°C. In particular, the elevated temperature is in a range from about 500°C to about 800°C.

Embodiments of the present disclosure also relate to a method of protecting a surface of an article from sulfate corrosion resulting from exposure to a sulfate containing material at an elevated temperature, which includes coating the surface with a nickel based coating material as described herein above to form a nickel based anti-corrosion coating.

In some embodiments, the nickel based coating material may be directly applied on a surface confronting the sulfate containing corrodent (the target surface). In some embodiments, the nickel based coating material may be applied to the target surface via an interfacial metal or oxide layer, for example, a bond layer such as CoNiCrAlY. The bond layer can improve adhesion of the nickel based coating on the base alloy. The nickel based coating material may be applied to the target surface via various coating processes, for example, spraying or deposition processes. In some embodiments, the nickel based coating material may be applied to the target surface by a thermal spray process, a wet-chemical deposition process, or a combination thereof. As used herein, the term "thermal spray process" refers to a coating process in which melted (or heated) materials are sprayed onto a surface. The term "wet-chemical deposition process" refers to a liquid-based coating process involving the application of a liquid precursor film on a substrate that is then converted to the desired coating by subsequent post-treatment steps. Some examples of wet-chemical deposition methods include dip coating methods, spin coating methods, spray coating methods, die coating methods, and screen printing methods.

In some embodiments, the nickel based coating material may be calcined, for example, at a temperature of about 400-1000°C for a period of about 1-3 hours before being applied to the target surface. In some embodiments, the calcined nickel based coating material may be further sintered before being applied to the target surface. For example, the calcined nickel based coating material may be sintered at a temperature of about 1000-1300°C for a period of about 1-5 hours. The nickel based coating material may become more stable against the sulfate containing corrodent at a temperature up to about 1500°C after sintering.

As the sulfate is decomposed to SO₂ over the nickel based coating, one or more ways may be introduced to help dissipate the SO₂ produced by sulfate decomposition. For example, a forced air flow may be introduced to dissipate SO₂. In some embodiments, the method as described above may further include dissipating SO₂ formed at the nickel based coating, for example, by a forced air flow at a volume flow rate of about 100 sccm (standard-state cubic centimeter per minute).

Embodiments of the present disclosure also relate to an article applied with a nickel based anti-corrosion coating as described herein above. The article may include a metallic substrate and an aforementioned nickel based anti-corrosion coating deposited on the metallic substrate. The metallic substrate may be made from any suitable metals or alloys, including but not limited to iron based alloy, cobalt based alloy, nickel based alloy, or a combination thereof. The nickel based anti-corrosion coating may be of any practical thickness as is commonly used for achieving corrosion resistance. In some embodiments, the nickel based anti-corrosion coating has a thickness of about 1-200um. In some particular embodiments, the nickel based anti-corrosion coating has a thickness of about 5-60um. The nickel based anti-corrosion coating may be applied by a process as described herein above.

The embodiments of the present disclosure are demonstrated with reference to some non-limiting examples. The following examples are set forth to provide those of ordinary skill in the art with a detailed description of how the materials and methods claimed herein are evaluated, and are not intended to limit the scope of what the inventors regard as their invention.

### Example I

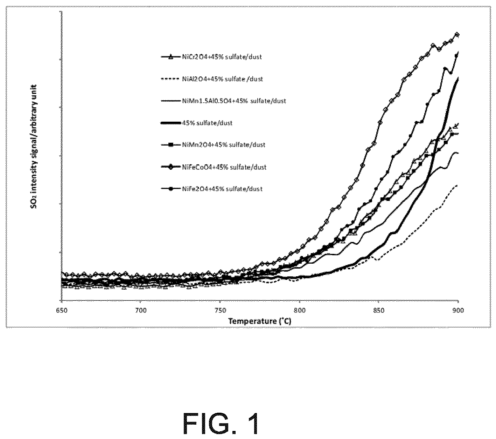

In the example I, various Ni-based AB₂O₄ spinels including at least one transition metal selected from Cr, Mn, Fe, Co and Al in the B-site were tested to evaluate their catalytic activity for sulfate decomposition. As for each spinel for test, a blend of the spinel and dust containing 45wt% sulfate, in a mass ratio of 1:1, was put into a thermo-gravimetric analyzer (TGA, from Mettler-Toledo AG, Switzerland) in an air stream of 80 ml/min, and heated from about 100°C to about 1000°C at a rate of about 10°C/min. A mass spectrometer (from Hiden Analytical, Warrington, UK) coupled with the TGA was used to monitor SO₂ decomposed in the exhaust from the TGA. Specifically, NiCr₂O₄, NiAl₂O₄, NiMn₂O₄, NiMn_{1.5}Al_{0.5}O₄, NiFe₂O₄, and NiFeCoO₄ were respectively blended with the dust and tested. Moreover, the dust without spinel was also tested and its SO₂ intensity was used as a reference for evaluating the catalytic activity. The monitored SO₂ intensity signal (arbitrary unit) at different temperatures in each test is shown in FIG. 1. The spinels which generate SO₂ intensity higher than that of the dust without spinel are regarded as having catalytic activity for sulfate decomposition. As can be seen form FIG. 1, NiCr₂O₄, NiMn₂O₄, NiMn_{1.5}Al_{0.5}O₄, NiFe₂O₄, and NiFeCoO₄ have catalytic activity for sulfate decomposition.

### Example II

In the example II, various nickel based materials including nickel oxide (NiO) and Ni-based AB₂O₄ spinels such as NiFe₂O₄, NiMn₂O₄, and their doped derivatives were tested and compared. As for each material for test, powder of the material was fabricated by preparing a precursor solution from one or more metal nitrate precursors, at least one organic chelating agent and at least one surfactant by a sol-gel process, and drying the precursor solution on a hot plate. For example, NiFe₂O₄ powder was fabricated by preparing a NiFe₂O₄ solution from nickel nitrate, ferric nitrate, citric acid (as an organic chelating agent) and triethylene glycol (as a surfactant) by a sol-gel process, and drying the NiFe₂O₄ solution on a hot plate. The powder of each material for test was calcined at about 550°C for about 2 hours. The calcined powders were then packed into pellets in a cylindrical pressing mold. Then each pellet was sintered at about 1200°C for about 2 hours in air.

To evaluate the anti-corrosion capability of these materials, pellets respectively made from these materials were subjected to a simulated corrosion test. In the simulated corrosion test, a mixture of Na₂SO₄, K₂SO₄, MgSO₄, CaSO₄, dust, and paste vehicle was applied as a sulfate corrodent onto surfaces of the sintered pellets and then the pellets applied with the sulfate corrodent were kept at a test temperature that corrosion is prone to occur. After the simulated corrosion test, the pellets were cut with a diamond saw, and the cross-sections were polished and analyzed to examine the elemental diffusion between the pellet and the corrodent. Capability to prevent sulfur penetration (S penetration) into the pellet is regarded as an indicator of sulfate corrosion resistance of the tested material, because sulfur is the dominant element causing hot corrosion. Cation leaching from the pellet to the sulfate corrodent is regarded as an indicator of stability of the tested material in the presence of the corrodent, and thus is also regarded as an indicator of the potential life of the tested material as a coating. Therefore, a depth of S penetration into the pellet is used to indicate sulfate corrosion resistance of the tested material, and cation leaching observed in the sulfate corrodent is used to indicate stability of the tested material in the presence of the corrodent.

Example 1: In this example, pellets respectively made from NiFe₂O₄, NiMn₂O₄, NiAl₂O₄, MCo₂O₄ and NiCr₂O₄ (Samples 1-5) were subjected to a simulated corrosion test as described herein above at a temperature of about 704°C for about 100 hours. As for each sample, a depth of S penetration into the pellet and cation leaching observed in the sulfate corrodent are illustrated in the following Table 1.

**Table 1**

| Samples | Materials | Corrosion Test | Depth of S penetration | Cation leaching |
|---|---|---|---|---|
| 1 | NiFe₂O₄ | 704°C, 100 hours | 0 | - |
| 2 | NiMn₂O₄ | 704°C, 100 hours | R | Mn, Ni |
| 3 | NiAl₂O₄ | 704°C, 100 hours | 10um (1.5%) | - |
| 4 | MCo₂O₄ | 704°C, 100 hours | R | Co |
| 5 | NiCr₂O₄ | 704°C, 100 hours | R | Cr, Ni |

| | | | | |
|---|---|---|---|---|
| Notes: R means a reaction layer is formed in the pellet. 1.5% means in the depth of S penetration (10 um), a maximum weight percentage of S is about 1.5%. | | | | |

It can be seen from Table 1 that, Sample 1 (NiFe₂O₄) can prevent S penetration into the pellet without cation leaching to the sulfate corrodent, whereas Sample 2 (NiMn₂O₄) shows a reaction layer formed in the pellet and Mn and Ni leaching from the pellet to the sulfate corrodent, Sample 3 (NiAl₂O₄) shows a 10um-depth of S penetration into the pellet, Sample 4 (NiCo₂O₄) shows a reaction layer formed in the pellet and Co leaching from the pellet to the sulfate corrodent, and Sample 5 (NiCr₂O₄) shows a reaction layer formed in the pellet and Cr and Ni leaching from the pellet to the sulfate corrodent.

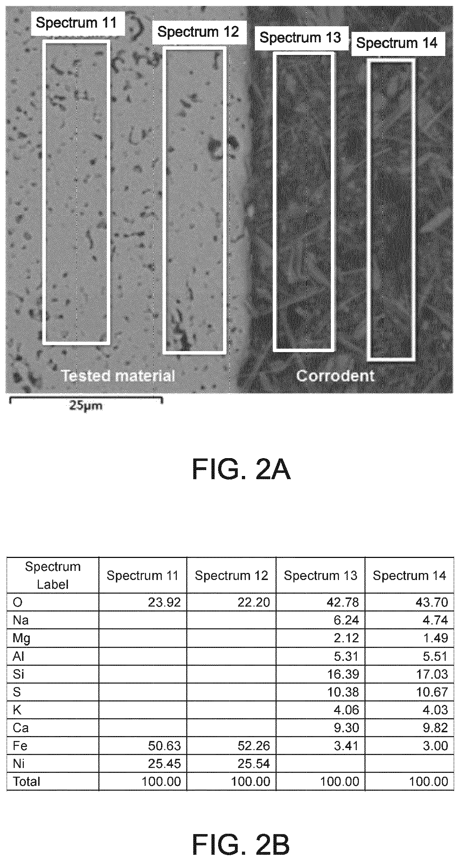

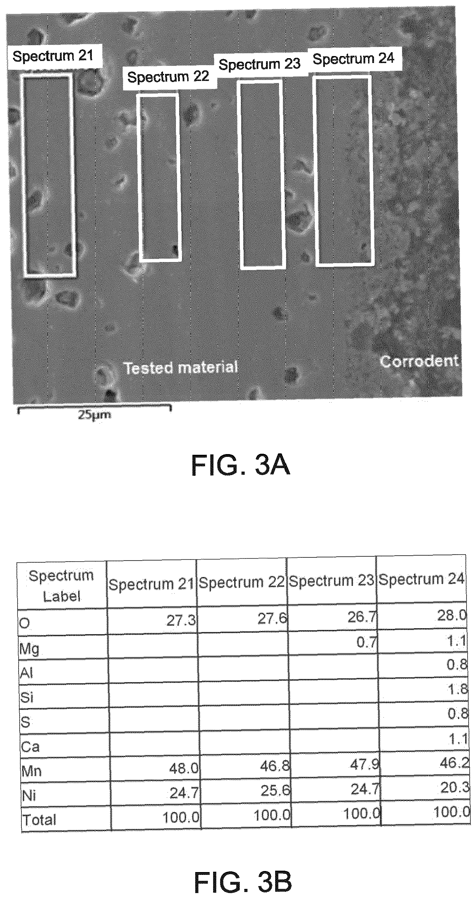

In order to observe the micromorphology of the Samples 1-5, scanning electron microscopy (SEM) images of the cross-sections of these samples are obtained and shown in FIGS. 2A, 3A, ..., and 6A, respectively. Moreover, to further analyze diffusion across a pellet surface (an interface between the tested material and the corrodent) of each sample, mass percent compositions of sampled areas adjacent to the pellet surface of each sample (labeled in the SEM image of each sample) were measured by energy dispersion X-ray (EDX). The measured compositions of the Samples 1-5 are illustrated in FIGS. 2B, 3B, ..., and 6B, respectively. For example, as for Sample 1, the SEM image of which is shown in FIG. 2A, mass percent compositions of four labeled areas, spectrums 11-14, were measured and illustrated in a diagram in FIG. 2B. Specifically, the spectrums 11-14 are arranged in order along a direction substantially perpendicular to the pellet surface from a tested material side (pellet side) to a corrodent side, wherein the spectrums 11 and 12 are located in the tested material side and the spectrums 13 and 14 are located in the corrodent side. As for each of the rest Samples 2-5, mass percent compositions of four or five labeled areas were measured and illustrated in a corresponding diagram in a similar way.

FIG. 2A shows a clean pellet cross section image, and no contamination can be observed. The measured result in FIG. 2B also proves that there is no inter diffusion between the corrodent and pellet across the pellet surface of Sample 1. It can thus be seen that the pellet made from NiFe₂O₄ is stable through the test.

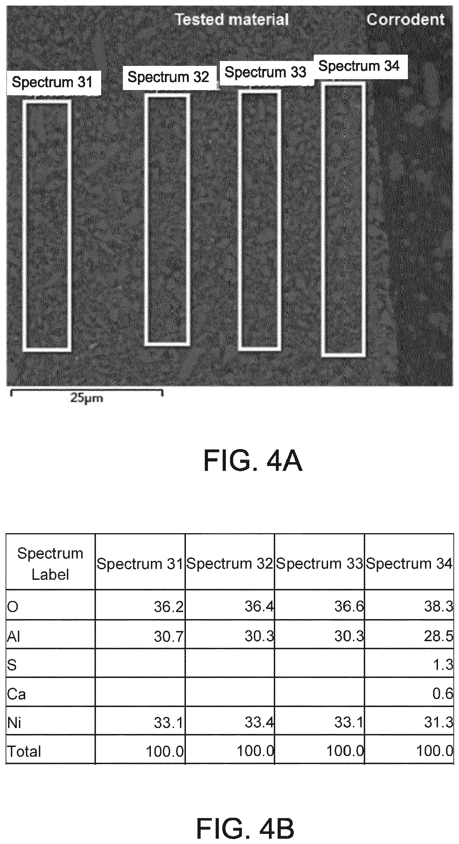

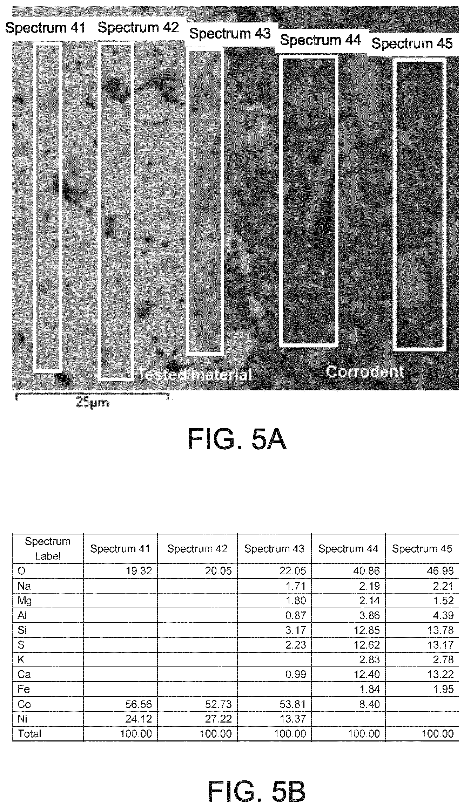

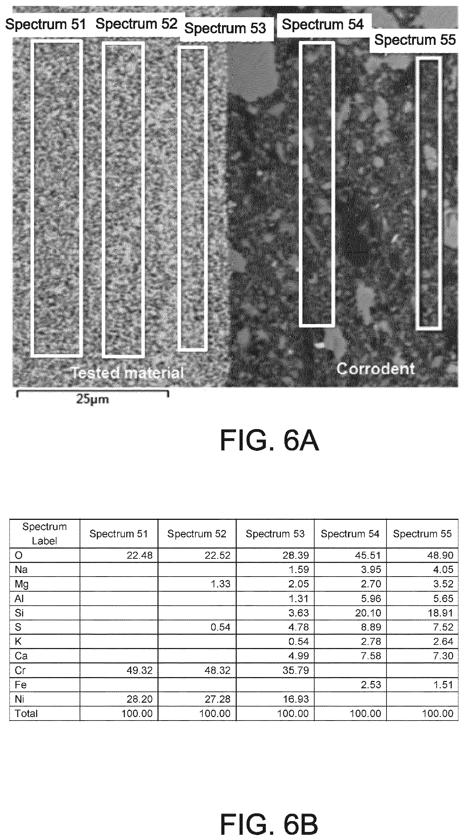

However, as shown in FIG. 3A, a reaction zone is observed in Sample 2 at the interface between the tested material and the corrodent. FIG. 3B indicates that there is diffusion from the corrodent to the pellet in Sample 2, and elements diffused from the corrodent side are detected in both spectrums 24 and 23 which are located in the pellet side, wherein Mg, Al, Si, S and Ca are detected in spectrum 24 and Mg is detected in spectrum 23. FIGS. 4A and 4B indicates that there is S migration to the pellet in Sample 3, and S diffused from the corrodent side is detected in spectrum 34 which is located in the pellet side and adjacent to the pellet surface. As shown in FIG. 5A, a reaction zone is observed in Sample 4 near the interface between the tested material and the corrodent. FIG. 5B indicates that Na, Mg, Al, Si, S, K and Ca diffusion from the corrodent side are detected in spectrum 43 which is located in the pellet side and Co diffusion from the pellet side is detected in spectrum 44 which is located in the corrodent side. FIGS. 6A and 6B indicate S migration to the pellet in Sample 5, and S diffused from the corrodent side is detected in spectrum 52 which is located in the pellet side and adjacent to the pellet surface.

Example 2: In this example, pellets respectively made from Co doped NiFe₂O₄ (NiFeCoO₄), Al doped NiFe₂O₄ (NiFeAlO₄), a combination of NiFe₂O₄ and NiO, Al doped NiMn₂O₄ (NiMnAlO₄), and a combination of NiMn₂O₄ and NiO (Samples 6-10) were subjected to a simulated corrosion test as described herein above at a temperature of about 704°C for about 100 hours. As for each sample, a depth of S penetration into the pellet and cation leaching observed in the sulfate corrodent are illustrated in the following Table 2.

**Table 2**

| Samples | Materials | Corrosion Test | Depth of S penetration | Cation leaching |
|---|---|---|---|---|
| 6 | NiFeCoO₄ | 704°C, 100 hours | 0 | - |
| 7 | NiFeAlO₄ | 704°C, 100 hours | 0 | - |
| 8 | 80wt%NiFe₂O₄+20wt%NiO | 704°C, 100 hours | 0 | - |
| 9 | NiMnAlO₄ | 704°C, 100 hours | 0 | Mn, Ni |
| 10 | 80wt%NiMn₂O₄+20%NiO | 704°C, 100 hours | R | Mn, Ni |

| | | | | |
|---|---|---|---|---|
| Notes: R means a reaction layer is formed in the pellet. | | | | |

It can be seen from Table 2 that, doped NiFe₂O₄, or the combination of NiFe₂O₄ and NiO show anti-sulfur corrosion capability and stability similar to these of NiFe₂O₄ under the sulfate corrosion condition. NiMnAlO₄ also shows anti-sulfur corrosion capability but there is cation diffusion to corrodent. The combination of NiMn₂O₄ and NiO are unstable under the sulfate corrosion condition.

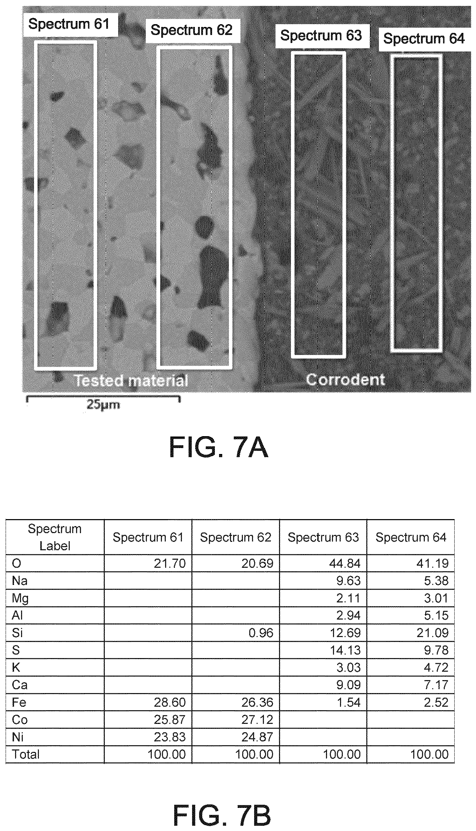

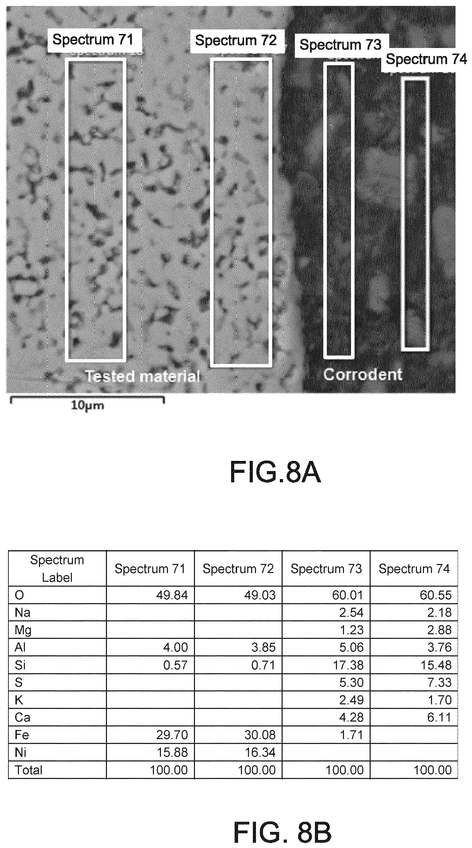

Similar to Example 1, SEM images of the cross-sections of the Samples 6-10 are shown in FIGS. 7A, 8A, ..., and 11A, respectively. Mass percent compositions of labeled areas in each of the SEM images of FIGS. 7A, 8A, ..., and 11A are illustrated in a corresponding diagram in FIGS. 7B, 8B, ..., and 11B, respectively.

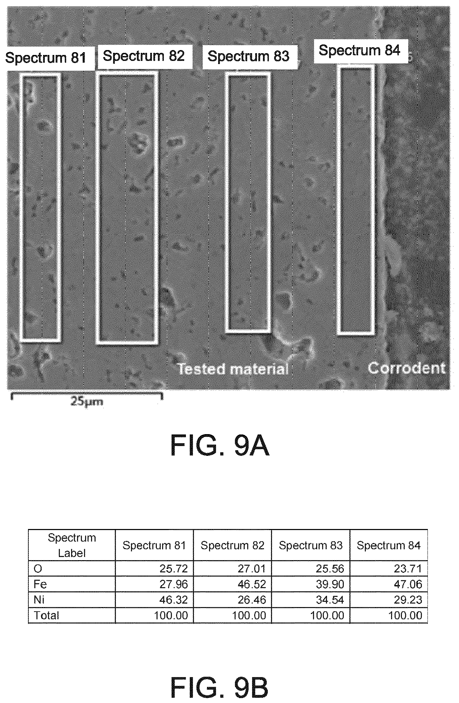

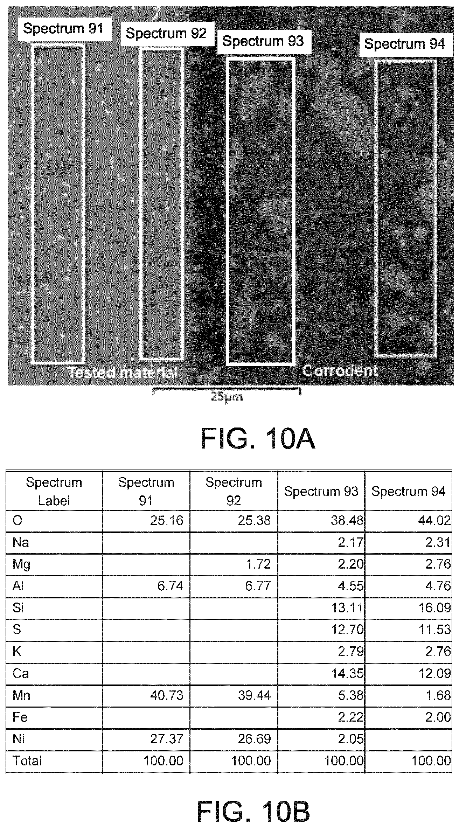

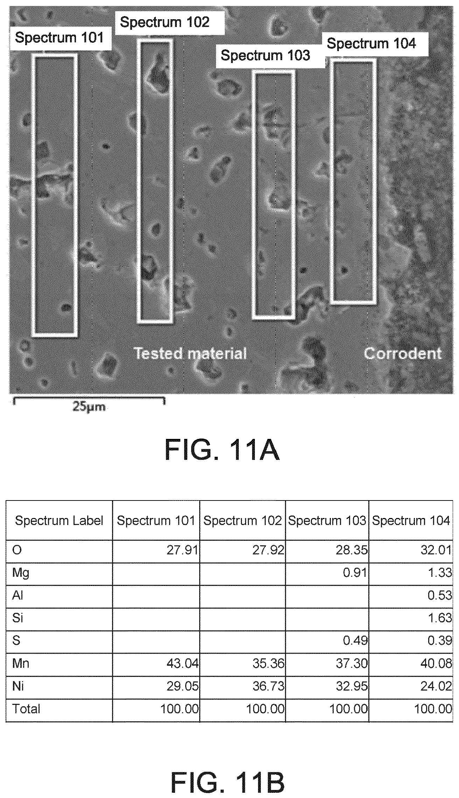

Each of FIGS. 7A, 8A and 9A shows a clean pellet cross section image. FIGS. 7B and 8B indicate that in Samples 6 and 7 there is neither S migration to the pellet nor cation leaching from the pellet into the corrodent, but only a very small amount of Si diffused from the corrodent to the pellet, which may not affect the anti-corrosion performance of the tested material very much. FIG. 9B indicates that there is no inter diffusion between the corrodent and pellet across the pellet surface of Sample 8. It can thus be seen that the pellet made from doped NiFe₂O₄, or a combination of NiFe₂O₄ and NiO is stable through the test. No sulfur diffusion is observed in the pellet of sample 9 in FIG. 10A, which indicates that NiMnAlO₄ has anti-sulfur capability. However, FIG. 10B indicates that Mn and Ni diffused from the pellet side are detected in spectrum 93 which is located in the corrodent side. As for Sample 10 made from a combination of NiMn₂O₄ and NiO, FIG. 11B indicates that there is S migration to the pellet, and S diffused from the corrodent side is detected in spectrum 104 which is located in the pellet side and adjacent to the pellet surface.

Example 3: In this example, pellets respectively made from NiO, NiFe₂O₄, NiFeCoO₄, NiFeAlO₄, a combination of NiFe₂O₄ and NiO, NiMn₂O₄ and NiMnAlO₄ (Samples 11-17) were subjected to a simulated corrosion test as described herein above at a temperature of about 704°C for about 500 hours (much longer than the testing duration in Examples 1 and 2). As for each sample, a depth of S penetration into the pellet and cation leaching observed in the sulfate corrodent are illustrated in the following Table 3.

**Table 3**

| Samples | Materials | Corrosion Test | Depth of S penetration | Cation leaching |
|---|---|---|---|---|
| 11 | NiO | 704°C, 500 hours | 0 | - |
| 12 | NiFe₂O₄ | 704°C, 500 hours | 0 | - |
| 13 | NiFeCoO₄ | 704°C, 500 hours | 0 | Co |
| 14 | NiFeAlO₄ | 704°C, 500 hours | 0 | - |
| 15 | 80wt%NiFe₂O₄+20%NiO | 704°C, 500 hours | 0 | - |
| 16 | NiMn₂O₄ | 704°C, 500 hours | R | Mn, Ni |
| 17 | NiMnAlO₄ | 704°C, 500 hours | R | Mn, Ni |

| | | | | |
|---|---|---|---|---|
| Notes: R means a reaction layer is formed in the pellet. | | | | |

It can be seen from Table 3 that, in the corrosion test of a longer duration, NiO, NiFe₂O₄, a combination of NiO and NiFe₂O₄, and NiFeAlO₄ remain stable, but NiFeCoO₄ shows phase segregation and leaching of Co into the sulfate corrodent. NiMn₂O₄ and its Al-doped derivative NiMnAlO₄ show severe S penetration and element leaching.

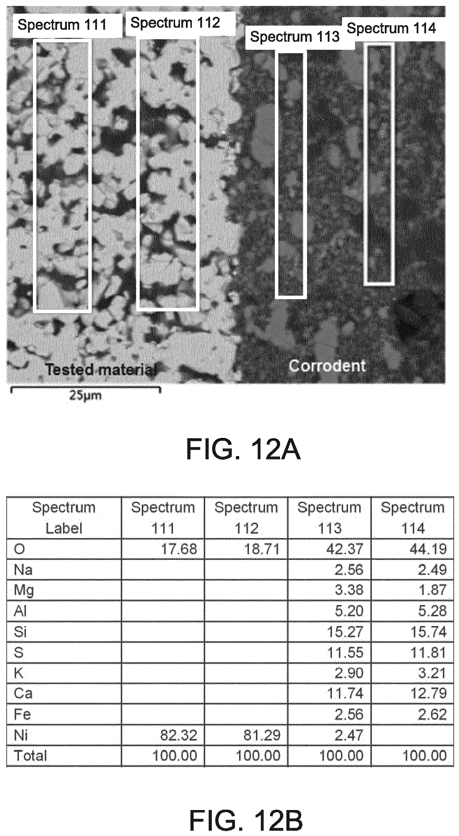

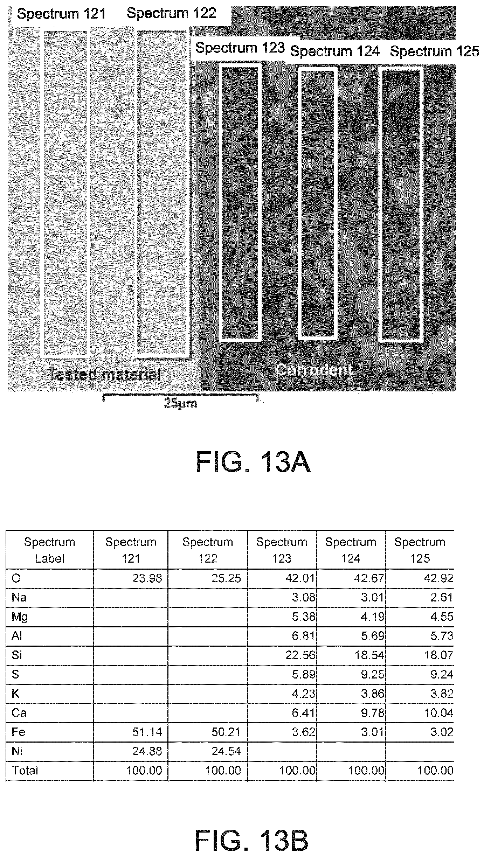

Similar to Example 1, SEM images of the cross-sections of the Samples 11-17 are shown in FIGS. 12A, 13A, ..., and 18A, respectively. Mass percent compositions of labeled areas in each of the SEM images of FIGS. 12A, 13A, ..., and 18A are illustrated in a corresponding diagram in FIGS. 12B, 13B, ..., and 18B, respectively.

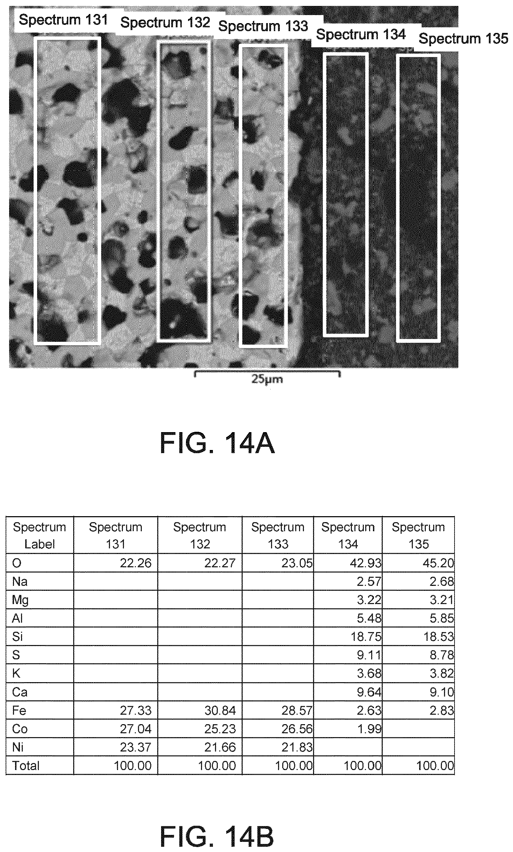

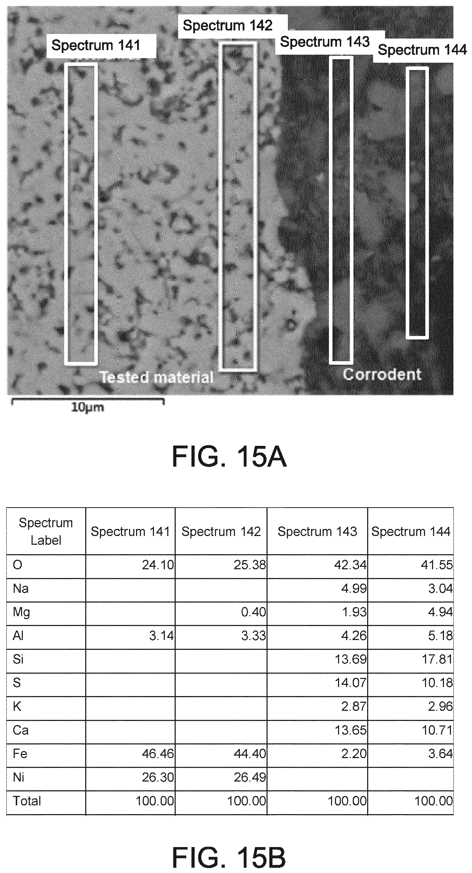

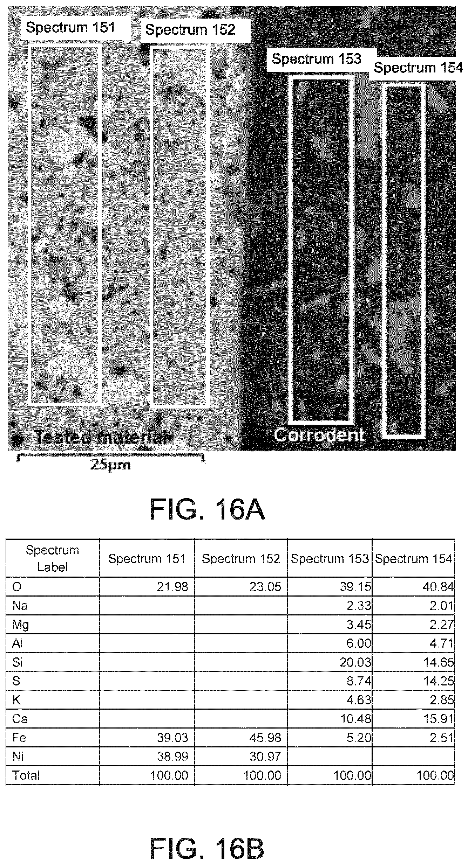

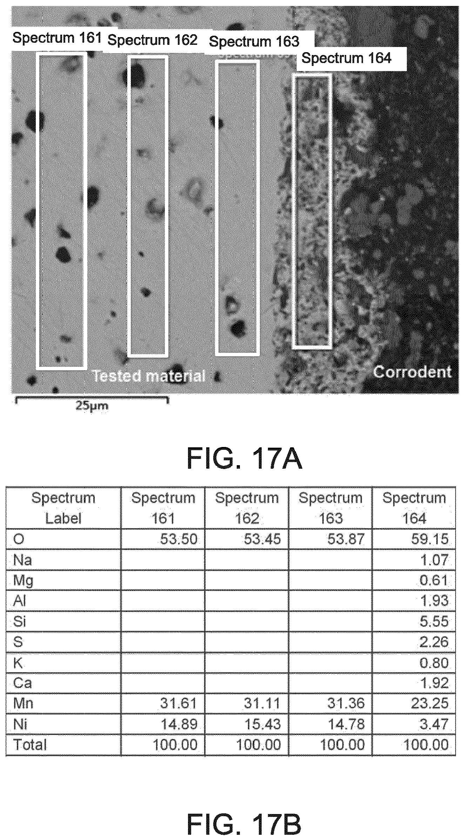

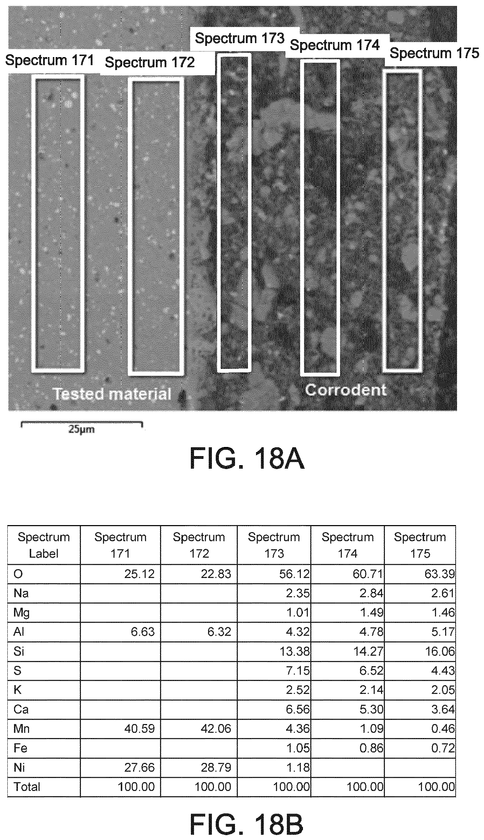

Each of FIGS. 12A, 13A, 15A and 16A shows a clean pellet cross section image. The measured results in FIGS. 12B, 13B and 16B also prove that there is no diffusion across the pellet surfaces of Samples 11, 12 and 15. FIG. 15B indicates that in Sample 14 there is neither S migration to the pellet nor cation leaching from the pellet into the corrodent, but only a very small amount of Mg diffused from the corrodent to the pellet, which may not affect the anti-corrosion performance very much. It can thus be seen that the pellet made from NiO, NiFe₂O₄, a combination of NiFe₂O₄ and NiO, or NiFeAlO₄ is stable through the test of a long duration. As shown in FIGS. 14A and 14B, NiFeCoO₄ can also block the penetration of sulfur in the pellet, suggesting the good anti-sulfur corrosion capability. However, FIG. 14B indicates that Co diffused from the pellet side is detected in spectrum 134 which is located in the corrodent side. This may affect the life time of the material. As for Sample 16 made from NiMn₂O₄, a reaction zone is observed near the interface between the tested material and the corrodent in FIG. 17A. FIG. 17B indicates that Na, Mg, Al, Si, S, K and Ca diffused from the corrodent side are detected in spectrum 164 which is located in the pellet side. As for Sample 17 made from NiMnAlO₄, Mn and Ni diffused from the pellet side is detected in spectrums 173-175 which are located in the corrodent side, as indicated in FIG. 18B. However, the reaction layer in FIG. 18A is much thinner than the reaction layer in FIG.17A, confirming that doped NiMn₂O₄ (NiMnAlO₄) has improved anti-sulfur corrosion capability and is a potential anti-sulfur corrosion material.

Although in the above examples, only AB₂O₄ spinels with a B site dopant were tested, it should be noted that AB₂O₄ spinels with an A site dopant are also applicable. The A site doping strategy may be the same as the B site doping strategy based on the common knowledge in this art.

This written description uses examples to describe the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

### Numbered clauses

1. A method for protecting a surface of an article from sulfate corrosion resulting from exposure to a sulfate containing material at an elevated temperature, comprising coating the surface with a nickel based material to form an anti-corrosion coating, the nickel based material comprising NiO, a spinel of formulation AB₂O₄, or a combination thereof, wherein A comprises nickel, and B comprises iron or a combination of manganese and a B site dopant.
2. The method of clause 1, wherein A further comprises an A site dopant.
3. The method of clause 2, wherein the A site dopant comprises aluminum, gallium, indium, silicon, titanium, vanadium, chromium, iron, cobalt, copper, zinc, sodium, potassium, magnesium, a rare earth element, or a combination thereof.
4. The method of any one of clauses 1 to 3, wherein B comprises iron.
5. The method of any one of clauses 1 to 3, wherein B comprises a combination of manganese and the B site dopant.
6. The method of any one of clauses 1 to 5, wherein the B site dopant comprises aluminum, gallium, indium, silicon, titanium, vanadium, chromium, iron, cobalt, copper, zinc, sodium, potassium, magnesium, a rare earth element, or a combination thereof.
7. The method of any one of clauses 1 to 6, wherein the nickel based material comprises NiO, NiFe₂O₄, Ni(Fe2-xCox)O4, Ni(Fe2-xAlx)04, Ni(Mn2-xAlx)O4, or a combination thereof, wherein 0<x<2.
8. The method of any one of clauses 1 to 7, further comprising calcining the nickel based material before the nickel based material is coated to the surface.
9. The method of clause 8, wherein the nickel based material is calcined at a temperature of about 400-1000°C.
10. The method of clause 8 or 9, further comprising sintering the calcined nickel based material before the calcined nickel based material is coated to the surface.
11. The method of clause 10, wherein the calcined nickel based material is sintered at a temperature of about 1000-1300°C.
12. The method of any one of clauses 1 to 11, wherein the elevated temperature is higher than about 500°C.
13. The method of any one of clauses 1 to 11, wherein the elevated temperature is in a range from about 500°C to about 800°C.
14. An article having an improved resistance to sulfate corrosion resulting from exposure to a sulfate containing material at an elevated temperature, comprising:
   a metallic substrate; and
   an anti-corrosion coating deposited on the metallic substrate, the anti-corrosion coating comprising NiO, a spinel of formulation AB₂O₄, or a combination thereof, wherein A comprises nickel, and B comprises iron or a combination of manganese and a B site dopant.
15. The article of clause 14, wherein A further comprises an A site dopant.
16. The article of clause 15, wherein the A site dopant comprises aluminum, gallium, indium, silicon, titanium, vanadium, chromium, iron, cobalt, copper, zinc, sodium, potassium, magnesium, a rare earth element, or a combination thereof.
17. The article of any one of clauses 14 to 16, wherein B comprises iron.
18. The article of any one of clauses 14 to 16, wherein B comprises a combination of manganese and the B site dopant.
19. The article of any one of clauses 14 to 18, wherein the B site dopant comprises aluminum, gallium, indium, silicon, titanium, vanadium, chromium, iron, cobalt, copper, zinc, sodium, potassium, magnesium, a rare earth element, or a combination thereof.
20. The article of any one of clauses 14 to 19, wherein the nickel based material comprises NiO, Ni(Fe2-xCox)O4, Ni(Fe2-xAlx)O4, Ni(Mn2-xAlx)O4, or a combination thereof, wherein 0<x<2.

## Claims

1. A method for protecting a surface of an article from sulfate corrosion resulting from exposure to a sulfate containing material at an elevated temperature, comprising coating the surface with a nickel based material to form an anti-corrosion coating, the nickel based material comprising NiO, a spinel of formulation AB₂O₄, or a combination thereof, wherein A comprises nickel, and B comprises iron or a combination of manganese and a B site dopant.

2. The method of claim 1, wherein A further comprises an A site dopant.

3. The method of claim 2, wherein the A site dopant comprises aluminum, gallium, indium, silicon, titanium, vanadium, chromium, iron, cobalt, copper, zinc, sodium, potassium, magnesium, a rare earth element, or a combination thereof.

4. The method of any one of claims 1 to 3, wherein the B site dopant comprises aluminum, gallium, indium, silicon, titanium, vanadium, chromium, iron, cobalt, copper, zinc, sodium, potassium, magnesium, a rare earth element, or a combination thereof.

5. The method of any one of claims 1 to 4, wherein the nickel based material comprises NiO, NiFe₂O₄, Ni(Fe₂₋ₓCoₓ)O₄, Ni(Fe₂₋ₓAlₓ)O₄, Ni(Mn₂₋ₓAlₓ)O₄, or a combination thereof, wherein 0<x<2.

6. The method of any one of claims 1 to 5, further comprising calcining the nickel based material before the nickel based material is coated to the surface.

7. The method of claim 6, wherein the nickel based material is calcined at a temperature of about 400-1000°C.

8. The method of claim 6 or 7, further comprising sintering the calcined nickel based material before the calcined nickel based material is coated to the surface.

9. The method of claim 8, wherein the calcined nickel based material is sintered at a temperature of about 1000-1300°C.

10. The method of any one of claims 1 to 9, wherein the elevated temperature is higher than about 500°, or wherein the elevated temperature is in a range from about 500°C to about 800°C.

11. An article having an improved resistance to sulfate corrosion resulting from exposure to a sulfate containing material at an elevated temperature, comprising:
a metallic substrate; and
an anti-corrosion coating deposited on the metallic substrate, the anti-corrosion coating comprising NiO, a spinel of formulation AB₂O₄, or a combination thereof, wherein A comprises nickel, and B comprises iron or a combination of manganese and a B site dopant.

12. The article of claim 11, wherein A further comprises an A site dopant.

13. The article of claim 12, wherein the A site dopant comprises aluminum, gallium, indium, silicon, titanium, vanadium, chromium, iron, cobalt, copper, zinc, sodium, potassium, magnesium, a rare earth element, or a combination thereof.

14. The article of any one of claims 11 to 13, wherein the B site dopant comprises aluminum, gallium, indium, silicon, titanium, vanadium, chromium, iron, cobalt, copper, zinc, sodium, potassium, magnesium, a rare earth element, or a combination thereof.

15. The article of any one of claims 11 to 14, wherein the nickel based material comprises NiO, Ni(Fe₂₋ₓCoₓ)O₄, Ni(Fe₂₋ₓAlₓ)O₄, Ni(Mn₂₋ₓAlₓ)O₄, or a combination thereof, wherein 0<x<2.

## Patentansprüche

1. Verfahren zum Schutz einer Oberfläche eines Gegenstandes vor Sulfatkorrosion, die sich aus dem Aussetzen einem sulfathaltigen Material bei erhöhter Temperatur ergibt, umfassend das Beschichten der Oberfläche mit einem Material auf Nickelbasis zur Bildung einer Korrosionsschutzbeschichtung, wobei das Material auf Nickelbasis NiO, einen Spinell der Formel AB₂O₄ oder eine Kombination davon umfasst, wobei A Nickel umfasst und B Eisen oder eine Kombination aus Mangan und einem Dotierungsmittel an der B-Stelle umfasst.

2. Verfahren nach Anspruch 1, wobei A weiter ein Dotierungsmittel an der A-Stelle umfasst.

3. Verfahren nach Anspruch 2, wobei das Dotierungsmittel an der A-Stelle Aluminium, Gallium, Indium, Silizium, Titan, Vanadium, Chrom, Eisen, Kobalt, Kupfer, Zink, Natrium, Kalium, Magnesium, ein Seltenerdelement oder eine Kombination davon umfasst.

4. Verfahren nach einem der Ansprüche 1 bis 3, wobei das Dotierungsmittel an der B-Stelle Aluminium, Gallium, Indium, Silizium, Titan, Vanadium, Chrom, Eisen, Kobalt, Kupfer, Zink, Natrium, Kalium, Magnesium, ein Seltenerdelement oder eine Kombination davon umfasst.

5. Verfahren nach einem der Ansprüche 1 bis 4, wobei das Material auf Nickelbasis NiO, NiFe₂O₄, Ni(Fe₂₋ₓCoₓ)O₄, Ni(Fe₂₋ₓAlₓ)O₄, Ni(Mn₂₋ₓAlₓ)O₄ oder eine Kombination davon umfasst, wobei 0<x<2.

6. Verfahren nach einem der Ansprüche 1 bis 5, weiter umfassend das Kalzinieren des Materials auf Nickelbasis, bevor das Material auf Nickelbasis auf die Oberfläche aufgebracht wird.

7. Verfahren nach Anspruch 6, wobei das Material auf Nickelbasis bei einer Temperatur von etwa 400-1000°C kalziniert wird.

8. Verfahren nach Anspruch 6 oder 7, weiter umfassend das Sintern des kalzinierten Materials auf Nickelbasis, bevor das kalzinierte Material auf Nickelbasis auf die Oberfläche aufgebracht wird.

9. Verfahren nach Anspruch 8, wobei das kalzinierte Material auf Nickelbasis bei einer Temperatur von etwa 1000-1300°C gesintert wird.

10. Verfahren nach einem der Ansprüche 1 bis 9, wobei die erhöhte Temperatur höher als etwa 500° ist, oder wobei die erhöhte Temperatur in einem Bereich von etwa 500°C bis etwa 800°C liegt.

11. Gegenstand mit verbesserter Beständigkeit gegen Sulfatkorrosion, die sich aus der Einwirkung eines sulfathaltigen Materials bei erhöhter Temperatur ergibt, umfassend:
ein metallisches Substrat; und
eine Korrosionsschutzbeschichtung, die auf dem metallischen Substrat abgeschieden ist, wobei die Korrosionsschutzbeschichtung NiO, einen Spinell der Formulierung AB₂O₄ oder eine Kombination davon umfasst, wobei A Nickel umfasst und B Eisen oder eine Kombination aus Mangan und einem Dotierungsmittel an der B-Stelle umfasst.

12. Gegenstand nach Anspruch 11, wobei A weiter ein Dotierungsmittel an der A-Stelle umfasst.

13. Gegenstand nach Anspruch 12, wobei das Dotierungsmittel an der A-Stelle Aluminium, Gallium, Indium, Silizium, Titan, Vanadium, Chrom, Eisen, Kobalt, Kupfer, Zink, Natrium, Kalium, Magnesium, ein Seltenerdelement oder eine Kombination davon umfasst.

14. Gegenstand nach einem der Ansprüche 11 bis 13, wobei das Dotierungsmittel an der B-Stelle Aluminium, Gallium, Indium, Silizium, Titan, Vanadium, Chrom, Eisen, Kobalt, Kupfer, Zink, Natrium, Kalium, Magnesium, ein Seltenerdelement oder eine Kombination davon umfasst.

15. Gegenstand nach einem der Ansprüche 11 bis 14, wobei das Material auf Nickelbasis NiO, Ni(Fe₂₋ₓCoₓ)O₄, Ni(Fe₂₋ₓAlₓ)O₄, Ni(Mn₂₋ₓAlₓ)O₄ oder eine Kombination davon umfasst, wobei 0<x<2.

## Revendications

1. Procédé de protection d'une surface d'un article contre une corrosion par le sulfate résultant d'une exposition à un matériau contenant un sulfate à une température élevée, comprenant le revêtement de la surface avec un matériau à base de nickel pour former un revêtement anticorrosion, le matériau à base de nickel comprenant du NiO, un spinelle de formulation AB₂O₄, ou une combinaison de ceux-ci, dans lequel A comprend du nickel, et B comprend du fer ou une combinaison de manganèse et d'un dopant de site B.

2. Procédé selon la revendication 1, dans lequel A comprend en outre un dopant de site A.

3. Procédé selon la revendication 2, dans lequel le dopant de site A comprend de l'aluminium, du gallium, de l'indium, du silicium, du titane, du vanadium, du chrome, du fer, du cobalt, du cuivre, du zinc, du sodium, du potassium, du magnésium, un élément des terres rares, ou une combinaison de ceux-ci.

4. Procédé selon l'une quelconque des revendications 1 à 3, dans lequel le dopant de site B comprend de l'aluminium, du gallium, de l'indium, du silicium, du titane, du vanadium, du chrome, du fer, du cobalt, du cuivre, du zinc, du sodium, du potassium, du magnésium, un élément des terres rares, ou une combinaison de ceux-ci.

5. Procédé selon l'une quelconque des revendications 1 à 4, dans lequel le matériau à base de nickel comprend du NiO, NiFe₂O₄, Ni(Fe₂₋ₓCoₓ)O₄, Ni(Fe₂₋ₓAlₓ)O₄, Ni(Mn₂₋ₓAlₓ)O₄, ou une combinaison de ceux-ci, dans lequel 0 < x < 2.

6. Procédé selon l'une quelconque des revendications 1 à 5, comprenant en outre la calcination du matériau à base de nickel avant que le matériau à base de nickel soit revêtu sur la surface.

7. Procédé selon la revendication 6, dans lequel le matériau à base de nickel est calciné à une température d'environ 400 à 1000 °C.

8. Procédé selon la revendication 6 ou 7, comprenant en outre le frittage du matériau à base de nickel calciné avant que le matériau à base de nickel calciné soit revêtu sur la surface.

9. Procédé selon la revendication 8, dans lequel le matériau à base de nickel calciné est fritté à une température d'environ 1000 à 1300 °C.

10. Procédé selon l'une quelconque des revendications 1 à 9, dans lequel la température élevée est supérieure à environ 500 °, ou dans lequel la température élevée est située dans une plage allant d'environ 500 °C à environ 800 °C.

11. Article présentant une résistance améliorée contre une corrosion par un sulfate résultant d'une exposition à un matériau contenant un sulfate à une température élevée, comprenant :
un substrat métallique ; et
un revêtement anticorrosion déposé sur le substrat métallique, le revêtement anticorrosion comprenant du NiO, un spinelle de formulation AB₂O₄, ou une combinaison de ceux-ci, dans lequel A comprend du nickel, et B comprend du fer ou une combinaison de manganèse et d'un dopant de site B.

12. Article selon la revendication 11, dans lequel A comprend en outre un dopant de site A.

13. Article selon la revendication 12, dans lequel le dopant de site A comprend de l'aluminium, du gallium, de l'indium, du silicium, du titane, du vanadium, du chrome, du fer, du cobalt, du cuivre, du zinc, du sodium, du potassium, du magnésium, un élément des terres rares, ou une combinaison de ceux-ci.

14. Article selon l'une quelconque des revendications 11 à 13, dans lequel le dopant de site B comprend de l'aluminium, du gallium, de l'indium, du silicium, du titane, du vanadium, du chrome, du fer, du cobalt, du cuivre, du zinc, du sodium, du potassium, du magnésium, un élément des terres rares, ou une combinaison de ceux-ci.

15. Article selon l'une quelconque des revendications 11 à 14, dans lequel le matériau à base de nickel comprend du NiO, Ni(Fe₂₋ₓCoₓ)O₄, Ni(Fe₂₋ₓAlₓ)O₄, Ni(Mn₂₋ₓAlₓ)O₄, ou une combinaison de ceux-ci, dans lequel 0 < x < 2.
